# EUROPÄISCHE PATENTSCHRIFT

(11) **EP 3 513 248 B1**
(45) Veröffentlichungstag und Bekanntmachung des Hinweises auf die Patenterteilung: **03.05.2023**
(21) Anmeldenummer: 17776955.1
(22) Anmeldetag: 14.09.2017
(51) Int. Cl.: G03B 17/53, G03B 15/06, F21V 8/00, G03B 15/07, G07C 9/00, G06K 9/00, H04N 5/225, H04N 1/00

(54) **ERFASSUNGSVORRICHTUNG ZUM ERFASSEN EINES GESICHTSBILDES EINER PERSON**
SENSING DEVICE FOR CAPTURING A FACIAL IMAGE OF A PERSON
DISPOSITIF DE CAPTURE D'UNE IMAGE FACIALE D'UNE PERSONNE

(30) Priorität: 16.09.2016 DE 102016117491
(43) Veröffentlichungstag der Anmeldung: 24.07.2019
(73) Patentinhaber: Bundesdruckerei GmbH, 10969 Berlin (DE)
(72) Erfinder: WOLF, Andreas, 13158 Berlin-Rosenthal (DE); RABELER, Uwe, 30453 Hannover (DE)
(74) Vertreter: Patentship Patentanwaltsgesellschaft mbH
(86) Internationale Anmeldenummer: PCT/EP2017/073168
(87) Internationale Veröffentlichungsnummer: WO 2018/050759

(56) Entgegenhaltungen:
- WO-A1-2016/120383
- WO-A2-01/71418
- DE-A1-102011 079 285
- DE-A1-102014 205 363
- US-A1- 2007 211 448

## Beschreibung

Die vorliegende Erfindung betrifft das Gebiet der Erfassung biometrischer Merkmale von Personen, insbesondere zur Identifikation von Personen durch Identifikationssysteme.

Für die Qualität der Erfassung eines Gesichts einer Person sowie die Identifizierung der Person ist die Beleuchtung des Gesichts von hoher Bedeutung. In den meisten Fällen, insbesondere bei Gesichtsbildern zur Verwendung in Identifikationsdokumenten, erfolgt die Beleuchtung im Weißlicht. Ziel ist es hierbei, im gesamten Gesicht einer Person eine möglichst homogene Ausleuchtung zu erreichen. Zudem dürfen bei ordnungsgemäß getragenen Brillen keine Reflektionen im Gesichtsbild sichtbar sein, welche die Sichtbarkeit der Augen beeinträchtigen können.

Ein Fotograf löst diese Herausforderung beispielsweise in einem Fotostudio, indem zwei Fotolampen in einem Winkel von etwa 30° nach links bzw. rechts und nach oben aus der optischen Achse geschwenkt werden und zudem ein Ergänzungslicht, welches das Gesicht schräg von unten beleuchtet, verwendet wird. Falls in dem Gesichtsbild störende Reflektionen, beispielsweise auf Brillen, erkennbar sind, wird die Position der Fotolampen so lange verändert, bis die Reflektionen verschwinden. Eine Veränderung der Kopfposition der Person ist hierbei üblicherweise keine Option, da dadurch eine voll frontale Ausrichtung des Kopfes nicht realisiert werden kann.

Eine derartige Anordnung ist jedoch typischerweise zu groß, um sie in einem Kiosk oder einer Büroumgebung verwenden zu können. Ferner sind hierbei Kompromisse bezüglich der Beleuchtung sowie bezüglich des Beleuchtungswinkels einzugehen, insbesondere hinsichtlich möglicher Reflektionen in einer Brille der Person, der Helligkeit des Gesichtsbildes oder einer möglichen Blendung der Person durch die Beleuchtung.

Die Offenlegungsschrift WO 01/71418 A2 offenbart einen Fotosiegelspender.

Die Offenlegungsschrift WO 2016/120383 A1 offenbart einen Sicherheitscheckpoint.

Die Offenlegungsschrift DE 10 2011 079285 A1 offenbart eine Vorrichtung zur Erfassung biometrischer Merkmale.

In der Druckschrift DE 10 2014 205 363 A1 ist eine Vorrichtung zur optischen Erfassung eines Dokumentes offenbart, welche eine Beleuchtungseinrichtung aufweist.

Es ist eine Aufgabe der vorliegenden Erfindung, ein Konzept zum Erfassen eines Gesichtsbildes einer Person zu schaffen, welches die vorgenannten Nachteile überwindet. Diese Aufgabe wird durch die Merkmale der unabhängigen Ansprüche gelöst. Vorteilhafte Weiterbildungsformen sind Gegenstand der abhängigen Patentansprüche, der Beschreibung sowie der Figuren.

Die Erfindung basiert auf der Erkenntnis, dass die obige Aufgabe durch eine Erfassungseinrichtung gelöst werden kann, welche eine Beleuchtungseinrichtung mit einer Leuchtfläche zum Beleuchten eines Gesichts einer Person und eine Bildkamera zum Erfassen eines Bildes des Gesichts der Person umfasst. Mittels der Leuchtfläche wird eine homogene Beleuchtung des Gesichts der Person ermöglicht. Ferner kann eine Beleuchtung des Gesichts mit geringem Schattenwurf sowie ohne Blendung der Person erfolgen.

Die Beleuchtungseinrichtung umfasst für diesen Zweck eine Lichtquelle und ein Lichtleitelement, wobei Licht durch die Lichtquelle in das Lichtleitelement eingekoppelt wird und über die Leuchtfläche in Richtung eines Erfassungsvolumens mit dem Gesicht der Person emittiert werden kann. Das Lichtleitelement kann über eine Oberfläche mit einer Mehrzahl von Oberflächenausnehmungen zum Reflektieren des eingekoppelten Lichts innerhalb des Lichtleitelements verfügen, wodurch eine homogene Emission des Lichts über die Leuchtfläche erreicht werden kann. Gemäß einer Ausführungsform ist die Oberfläche eine mikrostrukturierte Oberfläche.

Folglich kann eine Beleuchtung eines Gesichts einer Person realisiert werden, welche einen geringen Platzbedarf aufweist und trotzdem für Personen unterschiedlicher Körpergröße innerhalb eines Erfassungsvolumens vor einer Bildkamera homogen ausgeleuchtete Gesichtsbilder auch von Brillenträgern ermöglicht. Zudem können eine verbesserte Beleuchtung, geringere Fehler bei der Erfassung des Gesichtsbildes und eine höhere Benutzerakzeptanz erreicht werden.

Die Erfassungsvorrichtung kann beispielsweise in einem Identifikationssystem zum Identifizieren der Person verwendet werden, wobei das erfasste Gesichtsbild der Person mit einem Referenzgesichtsbild verglichen werden kann, um die Person zu identifizieren. Die Erfassungsvorrichtung kann ferner bei der Erfassung von Referenzdaten im Bereich der Registrierung (engl. Enrollment) oder bei Prüfanwendungen eingesetzt werden.

Gemäß einem ersten Aspekt betrifft die Erfindung eine Erfassungsvorrichtung zum Erfassen eines Gesichtsbildes einer Person, wobei ein Gesicht der Person in einem Erfassungsvolumen angeordnet ist. Die Erfassungsvorrichtung umfasst eine Beleuchtungseinrichtung, welche ausgebildet ist, das Gesicht der Person in dem Erfassungsvolumen zu beleuchten. Die Beleuchtungseinrichtung umfasst eine Lichtquelle und ein Lichtleitelement mit einer Leuchtfläche, wobei die Lichtquelle ausgebildet ist, Licht zu erzeugen und das erzeugte Licht in das Lichtleitelement einzukoppeln, und wobei das Lichtleitelement ausgebildet ist, das eingekoppelte Licht über die Leuchtfläche in Richtung des Erfassungsvolumens zu emittieren, um das Gesicht der Person homogen zu beleuchten. Die Erfassungsvorrichtung umfasst ferner eine Bildkamera, welche ausgebildet ist, ein Bild des Gesichts der Person in dem Erfassungsvolumen zu erfassen, um das Gesichtsbild der Person zu erfassen. Das Erfassungsvolumen kann eine vorbestimmte Höhe, eine vorbestimmte Breite, und eine vorbestimmte Tiefe aufweisen. Das Erfassungsvolumen kann vor der Bildkamera angeordnet sein.

Gemäß einer Ausführungsform weist das Lichtleitelement eine Oberfläche mit einer Mehrzahl von Oberflächenausnehmungen zum Reflektieren des eingekoppelten Lichts innerhalb des Lichtleitelements auf. Dadurch wird der Vorteil erreicht, dass eine homogene Emission des Lichts über der Leuchtfläche realisiert werden kann.

Gemäß einer Ausführungsform ist die Oberfläche eine mikrostrukturierte Oberfläche. Dadurch wird der Vorteil erreicht, dass die Oberflächenausnehmungen effizient realisiert werden können.

Gemäß einer Ausführungsform ist das Lichtleitelement transparent oder halbtransparent. Dadurch wird der Vorteil erreicht, dass das eingekoppelte Licht in dem Lichtleitelement effizient geleitet werden kann.

Gemäß einer Ausführungsform umfasst das Lichtleitelement ein optisches Element, insbesondere eine optische Linse, wobei das optische Element ausgebildet ist, das Licht in dem Lichtleitelement zu führen. Dadurch wird der Vorteil erreicht, dass das eingekoppelte Licht in dem Lichtleitelement effizient geleitet werden kann.

Gemäß einer Ausführungsform besteht das Lichtleitelement aus einem Kunststoff, insbesondere aus Polycarbonat. Dadurch wird der Vorteil erreicht, dass das Lichtleitelement robust gegenüber mechanischen Spannungen realisiert werden kann. Gemäß einer Ausführungsform weist das Lichtleitelement eine Ausnehmung auf, wobei die Bildkamera in der Ausnehmung des Lichtleitelementes angeordnet ist. Dadurch wird der Vorteil erreicht, dass eine homogene Ausleuchtung des Gesichts außerhalb einer optischen Achse der Bildkamera effizient realisiert werden kann.

Gemäß einer Ausführungsform umfasst die Leuchtfläche eine ebene Fläche. Dadurch wird der Vorteil erreicht, dass das Lichtleitelement einfach dimensioniert werden kann.

Gemäß einer Ausführungsform ist das Lichtleitelement ausgebildet, das eingekoppelte Licht homogen über die Leuchtfläche zu emittieren. Dadurch wird der Vorteil erreicht, dass eine gleichverteilte Intensität des emittierten Lichts auf der Leuchtfläche realisiert werden kann. Die Leuchtfläche kann eine vorbestimmte Leuchtflächenhöhe und eine vorbestimmte Leuchtflächenbreite aufweisen, innerhalb derer die Intensität des emittierten Lichts konstant ist.

Gemäß einer Ausführungsform umfasst die Erfassungsvorrichtung eine Detektionseinrichtung, welche ausgebildet ist, eine Reflektion des emittierten Lichts in dem erfassten Gesichtsbild zu detektieren, wobei die Lichtquelle ein erstes Leuchtelement und ein zweites Leuchtelement umfasst, und wobei die Detektionseinrichtung ausgebildet ist, ansprechend auf die Detektion der Reflektion in dem erfassten Gesichtsbild, das erste Leuchtelement oder das zweite Leuchtelement anzusteuern, um das emittierte Licht zu verändern. Dadurch wird der Vorteil erreicht, dass unerwünschte Reflektionen in dem Gesichtsbild automatisch reduziert werden können.

Gemäß einer Ausführungsform ist die Detektionseinrichtung ausgebildet, das erste Leuchtelement oder das zweite Leuchtelement zu dimmen. Dadurch wird der Vorteil erreicht, dass das emittierte Licht effizient verändert werden kann.

Gemäß einer Ausführungsform ist die Detektionseinrichtung ausgebildet, das erste Leuchtelement oder das zweite Leuchtelement auszuschalten. Dadurch wird der Vorteil erreicht, dass das emittierte Licht effizient verändert werden kann.

Gemäß einer Ausführungsform umfasst die Lichtquelle eine Leuchtdiode, insbesondere eine weiße Leuchtdiode. Dadurch wird der Vorteil erreicht, dass das Licht effizient erzeugt werden kann.

Gemäß einer Ausführungsform umfasst das erste Leuchtelement und/oder das zweite Leuchtelement eine Leuchtdiode, insbesondere eine weiße Leuchtdiode. Dadurch wird der Vorteil erreicht, dass das Licht effizient erzeugt werden kann.

Gemäß einem zweiten Aspekt betrifft die Erfindung ein Identifikationssystem zum Identifizieren einer Person. Das Identifikationssystem umfasst eine Erfassungsvorrichtung gemäß dem ersten Aspekt der Erfindung, wobei die Erfassungsvorrichtung ausgebildet ist, ein Gesichtsbild der Person zu erfassen. Das Identifikationssystem umfasst ferner einen Prozessor, welcher ausgebildet ist, das erfasste Gesichtsbild der Person mit einem Referenzgesichtsbild zu vergleichen, um die Person zu identifizieren.

Gemäß einer Ausführungsform umfasst das Identifikationssystem einen Speicher, wobei das Referenzgesichtsbild in dem Speicher vorgespeichert ist. Dadurch wird der Vorteil erreicht, dass das Referenzgesichtsbild effizient bereitgestellt werden kann.

Gemäß einer Ausführungsform umfasst das Identifikationssystem einen Dokumentenleser, welcher ausgebildet ist, das Referenzgesichtsbild aus einem Identifikationsdokument der Person auszulesen. Dadurch wird der Vorteil erreicht, dass das Referenzgesichtsbild effizient der Person zugeordnet werden kann.

Das Identifikationsdokument kann eines der folgenden Identifikationsdokumente sein: ein Personalausweis, ein Reisepass, ein Zugangskontrollausweis, ein Berechtigungsausweis, ein Unternehmensausweis, ein Ticket, ein Führerschein, eine Bankkarte oder eine Kreditkarte. Das Identifikationsdokument kann ferner einen elektronisch auslesbaren Schaltkreis, beispielsweise einen RFID-Chip, umfassen.

Gemäß einem dritten Aspekt betrifft die Erfindung ein Verfahren zum Erfassen eines Gesichtsbildes einer Person unter Verwendung einer Erfassungsvorrichtung. Die Erfassungsvorrichtung umfasst eine Beleuchtungseinrichtung und eine Bildkamera, wobei die Beleuchtungseinrichtung eine Lichtquelle und ein Lichtleitelement mit einer Leuchtfläche umfasst. Ein Gesicht der Person ist in einem Erfassungsvolumen angeordnet. Die Beleuchtungseinrichtung ist ausgebildet, das Gesicht der Person in dem Erfassungsvolumen zu beleuchten. Das Verfahren umfasst ein Erzeugen von Licht durch die Lichtquelle, ein Einkoppeln des erzeugten Lichts in das Lichtleitelement durch die Lichtquelle, ein Emittieren des eingekoppelten Lichts über die Leuchtfläche in Richtung des Erfassungsvolumens durch das Lichtleitelement, um das Gesicht der Person homogen zu beleuchten, und ein Erfassen eines Bildes des Gesichts der Person in dem Erfassungsvolumen durch die Bildkamera, um das Gesichtsbild der Person zu erfassen.

Das Verfahren kann durch die Erfassungsvorrichtung ausgeführt werden. Weitere Merkmale des Verfahrens resultieren unmittelbar aus den Merkmalen und/oder der Funktionalität der Erfassungsvorrichtung.

Gemäß einem vierten Aspekt betrifft die Erfindung ein Verfahren zum Identifizieren einer Person unter Verwendung eines Identifikationssystems. Das Identifikationssystem umfasst eine Erfassungsvorrichtung gemäß dem ersten Aspekt der Erfindung und einen Prozessor. Das Verfahren umfasst ein Erfassen eines Gesichtsbildes der Person durch die Erfassungsvorrichtung, und ein Vergleichen des erfassten Gesichtsbildes der Person mit einem Referenzgesichtsbild durch den Prozessor, um die Person zu identifizieren.

Das Verfahren kann durch das Identifikationssystem ausgeführt werden. Weitere Merkmale des Verfahrens resultieren unmittelbar aus den Merkmalen und/oder der Funktionalität des Identifikationssystems.

Gemäß einem fünften Aspekt betrifft die Erfindung ein Computerprogramm mit einem Programmcode zum Ausführen des Verfahrens gemäß dem dritten Aspekt der Erfindung oder des Verfahrens gemäß dem vierten Aspekt der Erfindung.

Die Erfassungsvorrichtung und/oder das Identifikationssystem können programmtechnisch eingerichtet sein, um den Programmcode oder Teile des Programmcodes auszuführen.

Die Erfindung kann in Hardware und/oder Software realisiert werden.

Weitere Ausführungsbeispiele werden Bezug nehmend auf die beiliegenden Figuren näher erläutert. Es zeigen:
Fig. 1 ein schematisches Diagramm einer Erfassungsvorrichtung zum Erfassen eines Gesichtsbildes einer Person;
Fig. 2 ein schematisches Diagramm eines Identifikationssystems zum Identifizieren einer Person;
Fig. 3 ein schematisches Diagramm einer Beleuchtungseinrichtung und eines Erfassungsvolumens;
Fig. 4 ein schematisches Diagramm eines Identifikationssystems zum Identifizieren einer Person;
Fig. 5 ein schematisches Diagramm eines Verfahrens zum Erfassen eines Gesichtsbildes einer Person unter Verwendung einer Erfassungsvorrichtung; und
Fig. 6 ein schematisches Diagramm eines Verfahrens zum Identifizieren einer Person unter Verwendung eines Identifikationssystems.

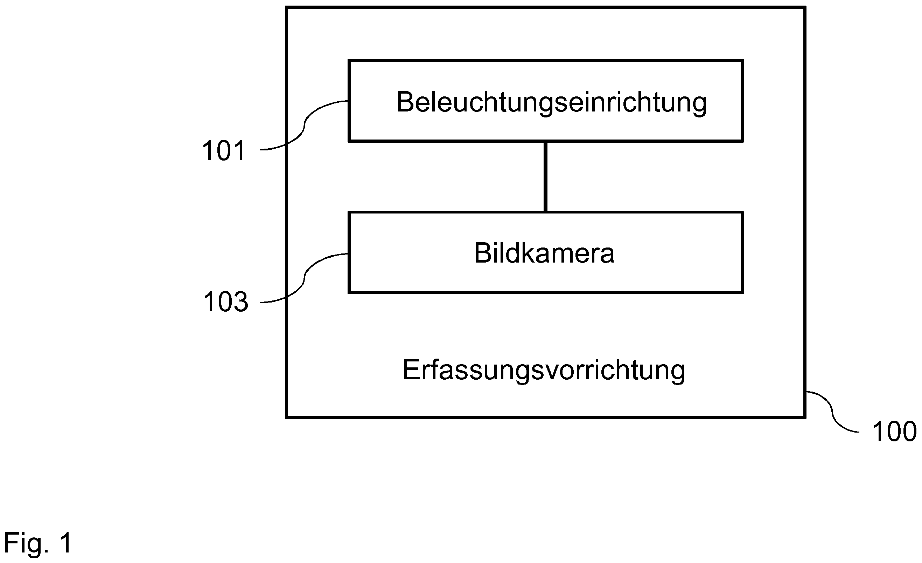

Fig. 1 zeigt ein schematisches Diagramm einer Erfassungsvorrichtung 100 zum Erfassen eines Gesichtsbildes einer Person. Ein Gesicht der Person ist in einem Erfassungsvolumen angeordnet. Die Erfassungsvorrichtung 100 umfasst eine Beleuchtungseinrichtung 101, welche ausgebildet ist, das Gesicht der Person in dem Erfassungsvolumen zu beleuchten. Die Beleuchtungseinrichtung 101 umfasst eine Lichtquelle und ein Lichtleitelement mit einer Leuchtfläche, wobei die Lichtquelle ausgebildet ist, Licht zu erzeugen und das erzeugte Licht in das Lichtleitelement einzukoppeln, und wobei das Lichtleitelement ausgebildet ist, das eingekoppelte Licht über die Leuchtfläche in Richtung des Erfassungsvolumens zu emittieren, um das Gesicht der Person homogen zu beleuchten. Die Erfassungsvorrichtung 100 umfasst ferner eine Bildkamera 103, welche ausgebildet ist, ein Bild des Gesichts der Person in dem Erfassungsvolumen zu erfassen, um das Gesichtsbild der Person zu erfassen.

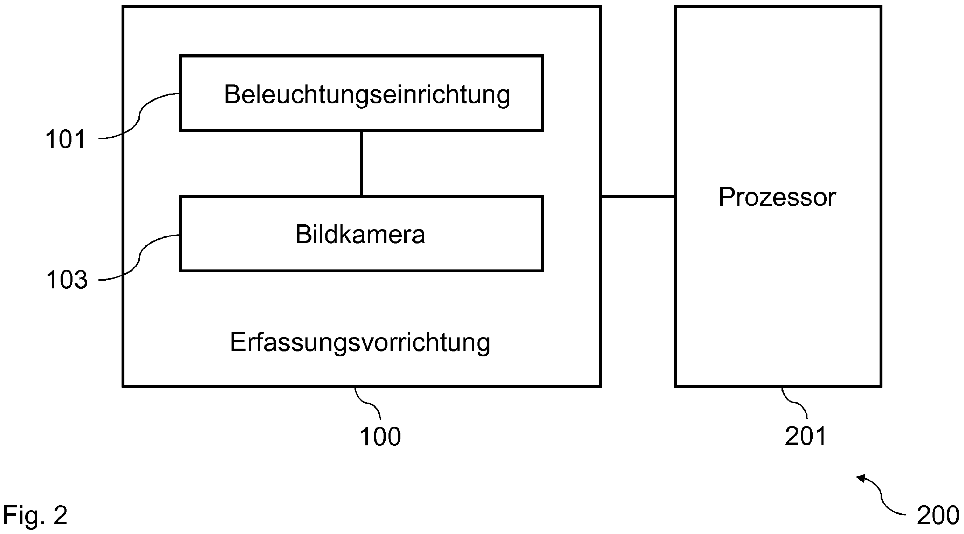

Fig. 2 zeigt ein schematisches Diagramm eines Identifikationssystems 200 zum Identifizieren einer Person. Das Identifikationssystem 200 umfasst eine Erfassungsvorrichtung 100 gemäß Fig. 1, wobei die Erfassungsvorrichtung 100 ausgebildet ist, ein Gesichtsbild der Person zu erfassen. Das Identifikationssystem 200 umfasst ferner einen Prozessor 201, welcher ausgebildet ist, das erfasste Gesichtsbild der Person mit einem Referenzgesichtsbild zu vergleichen, um die Person zu identifizieren.

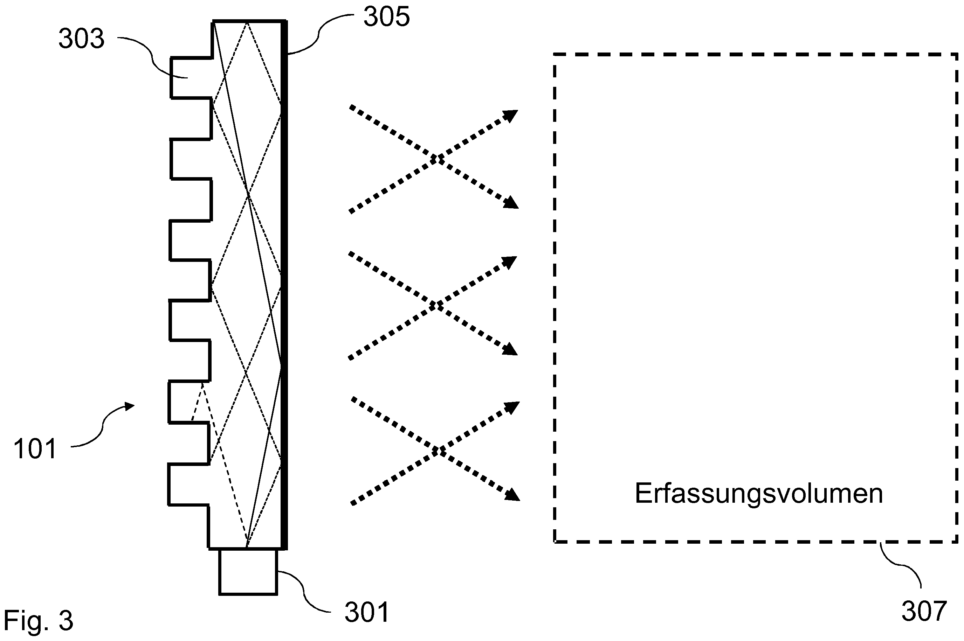

Fig. 3 zeigt ein schematisches Diagramm einer Beleuchtungseinrichtung 101 und eines Erfassungsvolumens 307 im Querschnitt. Die Beleuchtungseinrichtung 101 ist ausgebildet, ein Gesicht einer Person in dem Erfassungsvolumen 307 zu beleuchten. Die Beleuchtungseinrichtung 101 umfasst eine Lichtquelle 301 und ein Lichtleitelement 303 mit einer Leuchtfläche 305, wobei die Lichtquelle 301 ausgebildet ist, Licht zu erzeugen und das erzeugte Licht in das Lichtleitelement 303 einzukoppeln, und wobei das Lichtleitelement 303 ausgebildet ist, das eingekoppelte Licht über die Leuchtfläche 305 in Richtung des Erfassungsvolumens 307 zu emittieren, um das Gesicht der Person homogen zu beleuchten. Das Lichtleitelement 303 weist eine Oberfläche mit einer Mehrzahl von Oberflächenausnehmungen zum Reflektieren des eingekoppelten Lichts innerhalb des Lichtleitelements 303 auf. In dem Diagramm sind beispielhafte Lichtstrahlen innerhalb des Lichtleitelementes 303 gezeigt. Die Leuchtfläche 305 umfasst ferner eine ebene Fläche. Die Leuchtfläche 305 kann insbesondere eine ebene Fläche sein.

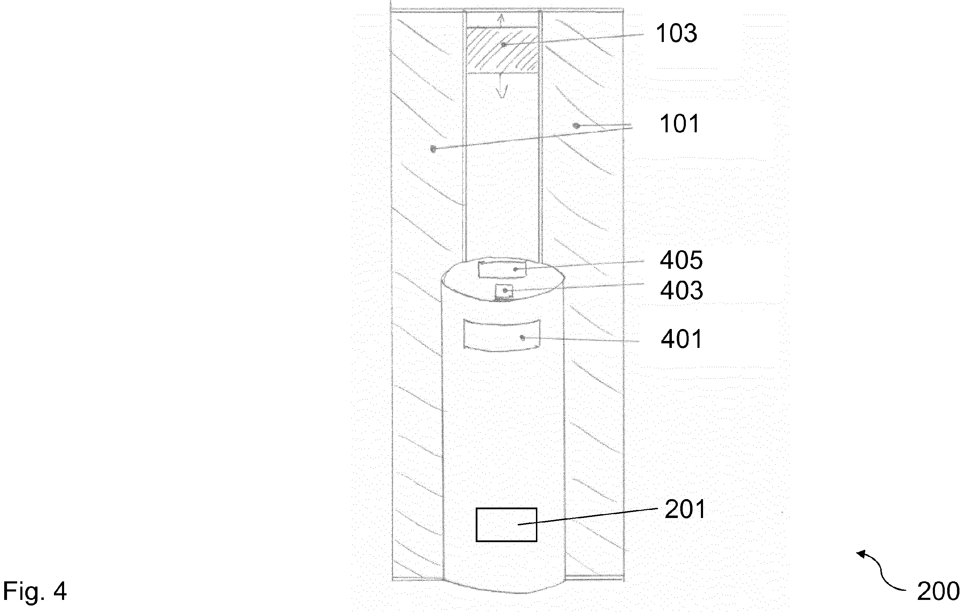

Fig. 4 zeigt ein schematisches Diagramm eines Identifikationssystems 200 zum Identifizieren einer Person. Ein Gesicht der Person ist in einem Erfassungsvolumen angeordnet. Das Identifikationssystem 200 umfasst eine Erfassungsvorrichtung, wobei die Erfassungsvorrichtung ausgebildet ist, ein Gesichtsbild der Person zu erfassen. Die Erfassungsvorrichtung umfasst eine Beleuchtungseinrichtung 101, welche ausgebildet ist, das Gesicht der Person in dem Erfassungsvolumen zu beleuchten. Die Beleuchtungseinrichtung 101 umfasst eine Lichtquelle und ein Lichtleitelement mit einer Leuchtfläche, wobei die Lichtquelle ausgebildet ist, Licht zu erzeugen und das erzeugte Licht in das Lichtleitelement einzukoppeln, und wobei das Lichtleitelement ausgebildet ist, das eingekoppelte Licht über die Leuchtfläche in Richtung des Erfassungsvolumens zu emittieren, um das Gesicht der Person homogen zu beleuchten. Die Erfassungsvorrichtung umfasst ferner eine Bildkamera 103, welche ausgebildet ist, ein Bild des Gesichts der Person in dem Erfassungsvolumen zu erfassen, um das Gesichtsbild der Person zu erfassen. Die Bildkamera 103 kann einen Spiegel aufweisen. Das Identifikationssystem 200 umfasst ferner einen Prozessor 201, welcher ausgebildet ist, das erfasste Gesichtsbild der Person mit einem Referenzgesichtsbild zu vergleichen, um die Person zu identifizieren.

Das Identifikationssystem 200 umfasst zudem einen Dokumentenleser 401, welcher ausgebildet ist, das Referenzgesichtsbild aus einem Identifikationsdokument der Person auszulesen. Das Identifikationssystem 200 umfasst ferner einen Fingerabdruckleser 403 und eine Anzeigeeinrichtung 405.

Die Beleuchtungseinrichtung 101 kann durch eine geeignete mikrostrukturierte Oberfläche des Lichtleitelements ein von einer Seite des Lichtleitelements eingekoppeltes Licht derart auskoppeln, dass das emittierte Licht auf das Gesicht der Person homogen einfällt. Das Lichtleitelement kann vergleichbar zu der Folie im Sinne der Druckschrift DE 10 2014 205 363 A1 realisiert werden, wobei eine entsprechende Skalierung zur homogenen Beleuchtung des Gesichts der Person innerhalb des Erfassungsvolumens vor der Bildkamera 103 durchgeführt werden kann.

Die Bildkamera 103 kann zur Erfassung eines biometrischen Gesichtsbildes der Person gemäß dem Standard ISO/IEC 19794-5 derart angeordnet sein, dass das Gesicht voll frontal aufgenommen wird. Dies schließt ein, dass das Gesicht der Person horizontal erfasst wird. Ferner kann die Bildkamera 103 in der Höhe verstellbar sein. Zudem kann auch etwa ein Sitz für die Person höhenverstellbar sein. Bei Identifikationssystemen zur Selbstbedienung durch die Person können neben der Erfassung des Gesichtsbildes auch andere Daten der Person erfasst werden. Die Person wird sich daher regelmäßig in Armlängenentfernung von der Bildkamera 103 aufhalten.

Zur Position des Kopfes der Person können ebenfalls Annahmen getroffen werden. Bei einem Großteil der Bevölkerung einschließlich Rollstuhlfahrern kann von einer Höhe des Kopfes zwischen 1,20m und 2,10m ausgegangen werden. Ferner kann angenommen werden, dass sich das Gesicht der Person bei der Erfassung des Gesichtsbildes in einem Erfassungsvolumen mit einer Höhe von etwa 1m, einer Breite von etwa 50cm und einer Tiefe von etwa 50cm befindet. Das Lichtleitelement mit der Licht auskoppelnden Leuchtfläche können auf dieses Erfassungsvolumen ausgelegt werden. Je nach Anwendungsfall kann das Erfassungsvolumen unterschiedlich ausgeprägt sein.

Das Lichtleitelement kann in Form einer Beleuchtungsplatte realisiert werden, welche beispielsweise links, rechts, oben und/oder unten oder auch in anderen Kombinationen angebracht sein kann. Die Leuchtfläche hat dabei eine viel größere Oberfläche als Punktlichtquellen bzw. Spot-Beleuchtungen und führt dadurch zu einer geringeren Belendwirkung. Das Lichtleitelement kann derart ausgelegt werden, dass für einzelne Bereiche spezifische Leuchtelemente der Lichtquelle Licht derart einkoppeln, dass das emittierte Licht bereichsweise gedimmt oder abgeschaltet werden kann und so für jeden Einzelfall nach Analyse eines erfassten Gesichtsbildes störende Reflektionen auf Brillengläsern im nächsten Gesichtsbild automatisiert entfernt werden können. Die Leuchtelemente können dabei durch Leuchtdioden (Light Emitting Diodes, LEDs) realisiert werden.

Das Material des Lichtleitelementes kann derart ausgewählt werden, dass dieses im ausgeschalteten Zustand transparent erscheint. Das Material des Lichtelements kann jedoch auch halbtransparent sein oder andere optische Eigenschaften aufweisen; je nachdem, ob das Lichtleitelement im ausgeschalteten Zustand sichtbar sein soll oder nicht. Damit sind Ausgestaltungen möglich, bei denen die Größe des Lichtleitelementes nicht sichtbar ist.

Folglich kann eine kompakte Erfassungsvorrichtung mit einer Beleuchtungseinrichtung 101 realisiert werden, welche eine geringe Blendwirkung aufweist, und welche eine homogene Ausleuchtung von Gesichtern für Gesichtsbilder und eine Reduzierung von störenden Reflektionen in Brillen ermöglicht.

Die Erfassungsvorrichtung kann in Systemen für die Erfassung von Referenzdaten, wie beispielsweise Selbstbedienungsterminals zur Erfassung von Gesichtsbildern für Ausweisdokumente, Erfassungssystemen bei Behörden oder Kiosken zur Datenerfassung, sowie in Verifikationssystemen, wie beispielsweise ABC-Gates oder Zutrittskontrollsystemen, verwendet werden. Ferner kann die Erfassungsvorrichtung in Gesichtserkennungssystemen eingesetzt werden.

Ein aus einem geeigneten Kunststoff, beispielsweise Polycarbonat, bestehendes Lichtleitelement kann links und rechts und gegebenenfalls oben in das Identifikationssystem 200 derart eingebracht werden, dass das Material Teil der Statik des Identifikationssystems 200 ist. Ist die Beleuchtungseinrichtung 101 inaktiv, so kann das Lichtleitelement durchsichtig sein. Ist die Beleuchtungseinrichtung 101 aktiv, leuchtet die Leuchtfläche und leuchtet das Erfassungsvolumen homogen aus. Durch eine Abschaltung oder Dimmung von Leuchtelementen der Lichtquelle kann erreicht werden, dass in den Gesichtsbildern keine unerwünschten Reflektionen in einer Brille sichtbar sind.

Ferner kann eine Zugangstür, beispielsweise eines Zutrittskontrollsystems, die Beleuchtungseinrichtung 101 mit dem Lichtleitelement und der Leuchtfläche umfassen. Dadurch kann die Intensität des emittierten Lichts pro Fläche weiter reduziert werden. Zudem kann eine Oberfläche des Identifikationssystems 200 mit der Beleuchtungseinrichtung 101 abgedeckt und nur ein Bereich freigelassen werden, in welchem sich die höhenverstellbare Bildkamera 103 befindet. Falls die mikrostrukturierte Oberfläche des Lichtleitelements nicht im erfassten Gesichtsbild sichtbar ist, kann lediglich im Bereich der Bildkamera 103 die Beleuchtungseinrichtung 101 ausschaltet werden.

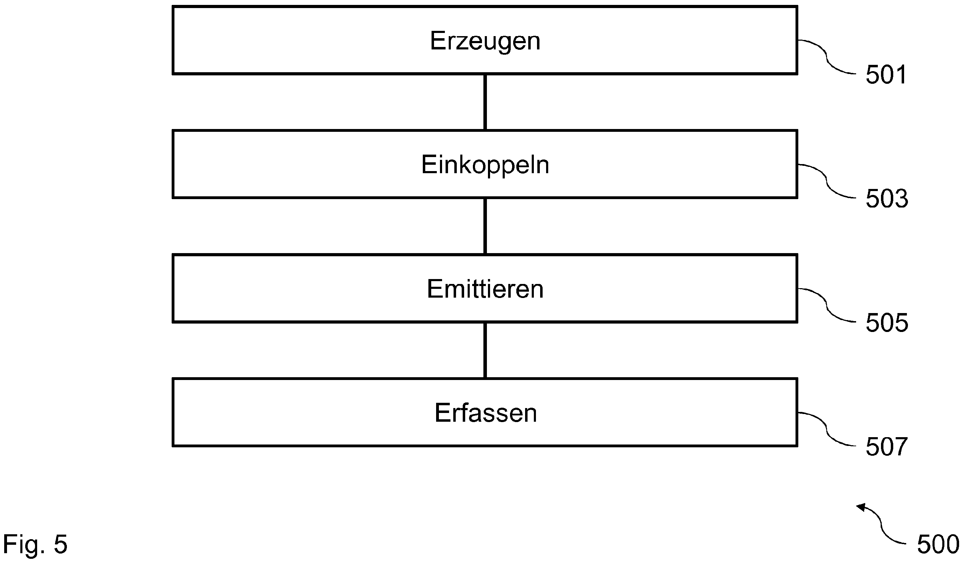

Fig. 5 zeigt ein schematisches Diagramm eines Verfahrens 500 zum Erfassen eines Gesichtsbildes einer Person unter Verwendung einer Erfassungsvorrichtung. Die Erfassungsvorrichtung umfasst eine Beleuchtungseinrichtung und eine Bildkamera, wobei die Beleuchtungseinrichtung eine Lichtquelle und ein Lichtleitelement mit einer Leuchtfläche umfasst. Ein Gesicht der Person ist in einem Erfassungsvolumen angeordnet. Die Beleuchtungseinrichtung ist ausgebildet, das Gesicht der Person in dem Erfassungsvolumen zu beleuchten. Das Verfahren 500 umfasst ein Erzeugen 501 von Licht durch die Lichtquelle, ein Einkoppeln 503 des erzeugten Lichts in das Lichtleitelement durch die Lichtquelle, ein Emittieren 505 des eingekoppelten Lichts über die Leuchtfläche in Richtung des Erfassungsvolumens durch das Lichtleitelement, um das Gesicht der Person homogen zu beleuchten, und ein Erfassen 507 eines Bildes des Gesichts der Person in dem Erfassungsvolumen durch die Bildkamera, um das Gesichtsbild der Person zu erfassen.

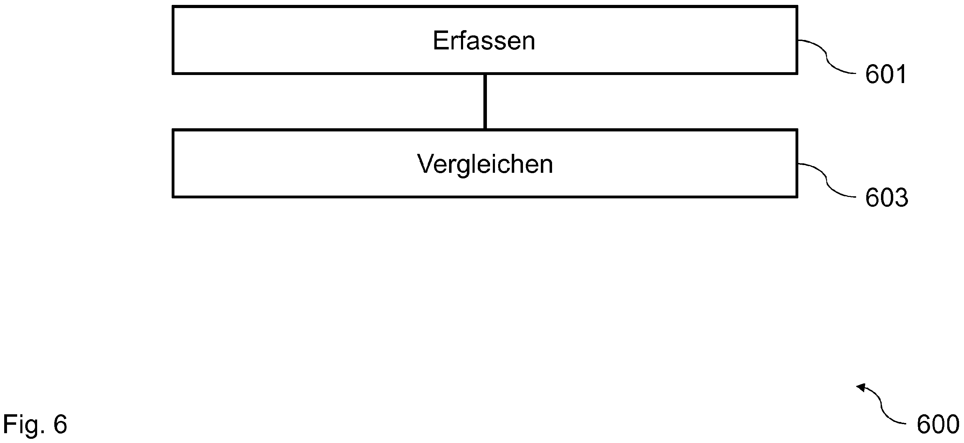

Fig. 6 zeigt ein schematisches Diagramm eines Verfahrens 600 zum Identifizieren einer Person unter Verwendung eines Identifikationssystems. Das Identifikationssystem umfasst eine Erfassungsvorrichtung gemäß Fig. 1 und einen Prozessor. Das Verfahren 600 umfasst ein Erfassen 601 eines Gesichtsbildes der Person durch die Erfassungsvorrichtung, und ein Vergleichen 603 des erfassten Gesichtsbildes der Person mit einem Referenzgesichtsbild durch den Prozessor, um die Person zu identifizieren.

Alle in Verbindung mit einzelnen Ausführungsformen der Erfindung gezeigten und beschriebenen Merkmale können in unterschiedlicher Kombination in dem erfindungsgemäßen Gegenstand vorgesehen sein, um gleichzeitig deren vorteilhafte Wirkungen zu realisieren.

### BEZUGSZEICHENLISTE

- 100: Erfassungsvorrichtung
- 101: Beleuchtungseinrichtung
- 103: Bildkamera
- 200: Identifikationssystem
- 201: Prozessor
- 301: Lichtquelle
- 303: Lichtleitelement
- 305: Leuchtfläche
- 307: Erfassungsvolumen
- 401: Dokumentenleser
- 403: Fingerabdruckleser
- 405: Anzeigeeinrichtung
- 500: Verfahren zum Erfassen eines Gesichtsbildes
- 501: Erzeugen
- 503: Einkoppeln
- 505: Emittieren
- 507: Erfassen
- 600: Verfahren zum Identifizieren einer Person
- 601: Erfassen
- 603: Vergleichen

## Patentansprüche

1. Erfassungsvorrichtung (100) zum Erfassen eines Gesichtsbildes einer Person, wobei ein Gesicht der Person in einem Erfassungsvolumen (307) angeordnet ist, mit:
einer Beleuchtungseinrichtung (101), welche ausgebildet ist, das Gesicht der Person in dem Erfassungsvolumen (307) zu beleuchten, wobei die Beleuchtungseinrichtung (101) eine Lichtquelle (301) und ein Lichtleitelement (303) mit einer Leuchtfläche (305) umfasst, wobei die Lichtquelle (301) ausgebildet ist, Licht zu erzeugen und das erzeugte Licht in das Lichtleitelement (303) einzukoppeln, und wobei das Lichtleitelement (303) ausgebildet ist, das eingekoppelte Licht über die Leuchtfläche (305) in Richtung des Erfassungsvolumens (307) zu emittieren, um das Gesicht der Person homogen zu beleuchten; und
einer Bildkamera (103), welche ausgebildet ist, ein Bild des Gesichts der Person in dem Erfassungsvolumen (307) zu erfassen, um das Gesichtsbild der Person zu erfassen,
**dadurch gekennzeichnet, dass**
das Lichtleitelement (303) eine Oberfläche mit einer Mehrzahl von Oberflächenausnehmungen zum Reflektieren des eingekoppelten Lichts innerhalb des Lichtleitelements (303) aufweist.

2. Erfassungsvorrichtung (100) nach Anspruch 1, wobei das Lichtleitelement (303) transparent oder halbtransparent ist.

3. Erfassungsvorrichtung (100) nach einem der vorstehenden Ansprüche, wobei das Lichtleitelement (303) ein optisches Element, insbesondere eine optische Linse, umfasst, und wobei das optische Element ausgebildet ist, das Licht in dem Lichtleitelement (303) zu führen.

4. Erfassungsvorrichtung (100) nach einem der vorstehenden Ansprüche, wobei das Lichtleitelement (303) aus einem Kunststoff, insbesondere aus Polycarbonat, besteht.

5. Erfassungsvorrichtung (100) nach einem der vorstehenden Ansprüche, wobei das Lichtleitelement (303) eine Ausnehmung aufweist, und wobei die Bildkamera (103) in der Ausnehmung des Lichtleitelementes (303) angeordnet ist.

6. Erfassungsvorrichtung (100) nach einem der vorstehenden Ansprüche, wobei die Leuchtfläche (305) eine ebene Fläche umfasst.

7. Erfassungsvorrichtung (100) nach einem der vorstehenden Ansprüche, mit:
einer Detektionseinrichtung, welche ausgebildet ist, eine Reflektion des emittierten Lichts in dem erfassten Gesichtsbild zu detektieren;
wobei die Lichtquelle (301) ein erstes Leuchtelement und ein zweites Leuchtelement umfasst, und wobei die Detektionseinrichtung ausgebildet ist, ansprechend auf die Detektion der Reflektion in dem erfassten Gesichtsbild, das erste Leuchtelement oder das zweite Leuchtelement anzusteuern, um das emittierte Licht zu verändern.

8. Erfassungsvorrichtung (100) nach Anspruch 7, wobei die Detektionseinrichtung ausgebildet ist, das erste Leuchtelement oder das zweite Leuchtelement zu dimmen, oder wobei die Detektionseinrichtung ausgebildet ist, das erste Leuchtelement oder das zweite Leuchtelement auszuschalten.

9. Erfassungsvorrichtung (100) nach einem der vorstehenden Ansprüche, wobei die Lichtquelle (301) eine Leuchtdiode, insbesondere eine weiße Leuchtdiode, umfasst.

10. Identifikationssystem (200) zum Identifizieren einer Person, mit:
einer Erfassungsvorrichtung (100) nach einem der Ansprüche 1 bis 9, wobei die Erfassungsvorrichtung (100) ausgebildet ist, ein Gesichtsbild der Person zu erfassen; und
einem Prozessor (201), welcher ausgebildet ist, das erfasste Gesichtsbild der Person mit einem Referenzgesichtsbild zu vergleichen, um die Person zu identifizieren.

11. Identifikationssystem (200) nach Anspruch 10, mit: einem Dokumentenleser (401), welcher ausgebildet ist, das Referenzgesichtsbild aus einem Identifikationsdokument der Person auszulesen.

12. Verfahren (500) zum Erfassen eines Gesichtsbildes einer Person unter Verwendung einer Erfassungsvorrichtung (100), wobei die Erfassungsvorrichtung (100) eine Beleuchtungseinrichtung (101) und eine Bildkamera (103) umfasst, wobei die Beleuchtungseinrichtung (101) eine Lichtquelle (301) und ein Lichtleitelement (303) mit einer Leuchtfläche (305) umfasst, wobei ein Gesicht der Person in einem Erfassungsvolumen (307) angeordnet ist, und wobei die Beleuchtungseinrichtung (101) ausgebildet ist, das Gesicht der Person in dem Erfassungsvolumen (307) zu beleuchten, wobei das Lichtleitelement (303) eine Oberfläche mit einer Mehrzahl von Oberflächenausnehmungen zum Reflektieren des eingekoppelten Lichts innerhalb des Lichtleitelements (303) aufweist, mit:
Erzeugen (501) von Licht durch die Lichtquelle (301);
Einkoppeln (503) des erzeugten Lichts in das Lichtleitelement (303) durch die Lichtquelle (301);
Emittieren (505) des eingekoppelten Lichts über die Leuchtfläche (305) in Richtung des Erfassungsvolumens (307) durch das Lichtleitelement (303), um das Gesicht der Person homogen zu beleuchten; und
Erfassen (507) eines Bildes des Gesichts der Person in dem Erfassungsvolumen (307) durch die Bildkamera (103), um das Gesichtsbild der Person zu erfassen,
wobei das eingekoppelte Licht innerhalb des Lichtleitelements (303) durch die Mehrzahl von Oberflächenausnehmungen reflektiert wird.

13. Verfahren (600) zum Identifizieren einer Person unter Verwendung eines Identifikationssystems (200), wobei das Identifikationssystem (200) eine Erfassungsvorrichtung (100) nach einem der Ansprüche 1 bis 9 und einen Prozessor (201) umfasst, mit:
Erfassen (601) eines Gesichtsbildes der Person durch die Erfassungsvorrichtung (100); und
Vergleichen (603) des erfassten Gesichtsbildes der Person mit einem Referenzgesichtsbild durch den Prozessor (201), um die Person zu identifizieren.

14. Computerprogramm, umfassend Befehle, die bei der Ausführung des Programms durch einen Computer diesen veranlassen, das Verfahren (500) nach Anspruch 12 oder das Verfahren (600) nach Anspruch 13 auszuführen.

## Claims

1. A capturing device (100) for capturing a facial image of a person, wherein a face of the person is located in a capturing volume (307), comprising:
an illumination device (101), which is configured to illuminate the face of the person in the capturing volume (307), wherein the illumination device (101) comprises a light source (301) and a light-guiding element (303) with a luminous surface (305), wherein the light source (301) is configured to generate light and to couple the generated light into the light-guiding element (303), and wherein the light-guiding element (303) is configured to emit the coupled-in light via the luminous surface (305) in the direction of the capturing volume (307) in order to illuminate the face of the person homogeneously; and
an image camera (103), which is configured to capture an image of the face of the person in the capturing volume (307) in order to capture the facial image of the person,
**characterized in that** the light-guiding element (303) comprises a surface with a plurality of surface recesses for reflecting the coupled-in light within the light-guiding element (303).

2. The capturing device (100) according to claim 1, wherein the light-guiding element (303) is transparent or semi-transparent.

3. The capturing device (100) according to one of the preceding claims, wherein the light-guiding element (303) comprises an optical element, in particular an optical lens, and wherein the optical element is configured to guide the light in the light-guiding element (303).

4. The capturing device (100) according to one of the preceding claims, wherein the light-guiding element (303) consists of plastic, in particular polycarbonate.

5. The capturing device (100) according to one of the preceding claims, wherein the light-guiding element (303) comprises a recess, and wherein the image camera (103) is arranged in the recess of the light-guiding element (303).

6. The capturing device (100) according to one of the preceding claims, wherein the luminous surface (305) comprises a flat surface.

7. The capturing device (100) according to one of the preceding claims, comprising:
a detection device, which is configured to detect a reflection of the emitted light in the captured facial image;
wherein the light source (301) comprises a first luminous element and a second luminous element, and wherein the detection device is configured to control the first luminous element or the second luminous element in response to the detection of the reflection in the captured facial image in order to change the emitted light.

8. The capturing device (100) according to claim 7, wherein the detection device is configured to dim the first light-emitting element or the second light-emitting element, or wherein the detection device is configured to switch off the first light-emitting element or the second light-emitting element.

9. The capturing device (100) according to one of the preceding claims, wherein the light source (301) comprises a light-emitting diode, in particular a white light-emitting diode.

10. An identification system (200) for identifying a person, comprising:
a capturing device (100) according to one of the claims 1 to 9, wherein the capturing device (100) is configured to capture a facial image of the person; and
a processor (201), which is configured to compare the captured facial image of the person to a reference facial image in order to identify the person.

11. The identification system (200) according to claim 10, comprising:
a document reader (401), which is configured to read-out the reference facial image from an identification document of the person.

12. A method (500) for capturing a facial image of a person using a capturing device (100), wherein the capturing device (100) comprises an illumination device (101) and an imaging camera (103), wherein the illumination device (101) comprises a light source (301) and a light-guiding element (303) with a luminous surface (305), wherein a face of the person is located in a capturing volume (307), and wherein the illumination device (101) is configured to illuminate the face of the person in the capturing volume (307), wherein the light-guiding element (303) has a surface with a plurality of surface recesses for reflecting the coupled-in light within the light-guiding element (303), comprising:
generating (501) light by the light source (301);
coupling-in (503) the generated light into the light-guiding element (303) by the light source (301);
emitting (505) the coupled-in light via the luminous surface (305) in direction of the capturing volume (307) by the light-guiding element (303) in order to illuminate the face of the person homogeneously; and
capturing (507) an image of the face of the person in the capturing volume (307) by the imaging camera (103) in order to capture the facial image of the person,
wherein the coupled-in light within the light-guiding element (303) is reflected by the plurality of surface recesses.

13. A method (600) for identifying a person using an identification system (200), wherein the identification system (200) comprises a capturing device (100) according to one of the claims 1 to 9 and a processor (201), comprising:
capturing (601) a facial image of the person by the capturing device (100); and
comparing (603) the captured facial image of the person to a reference facial image by the processor (201) in order to identify the person.

14. A computer program comprising instructions, which cause, when the program is executed by a computer, the computer to execute the method (500) according to claim 12 or the method (600) according to claim 13.

## Revendications

1. Dispositif de capture (100) destiné à capturer l'image du visage d'une personne,
le visage de la personne étant situé dans un volume de capture (307), ledit dispositif de capture comprenant :
un dispositif d'éclairage (101) qui est conçu pour éclairer le visage de la personne dans le volume de capture (307), le dispositif d'éclairage (101) comprenant une source de lumière (301) et un élément photoconducteur (303) pourvu d'une surface lumineuse (305), la source de lumière (301) étant conçue pour générer de la lumière et injecter par couplage la lumière générée dans l'élément photoconducteur (303), et l'élément photoconducteur (303) étant conçu pour émettre la lumière injectée par couplage en direction du volume de capture (307) par le biais de la surface lumineuse (305) afin d'éclairer le visage de la personne de manière homogène ; et
une caméra vidéo (103) qui est conçue pour capturer une image du visage de la personne dans le volume de capture (307) afin de capturer l'image du visage de la personne, **caractérisé en ce que**
l'élément photoconducteur (303) comporte une surface pourvue d'une pluralité d'évidements de surface destinés à réfléchir la lumière injectée par couplage à l'intérieur de l'élément photoconducteur (303).

2. Dispositif de capture (100) selon la revendication 1, l'élément photoconducteur (303) étant transparent ou semi-transparent.

3. Dispositif de capture (100) selon l'une des revendications précédentes, l'élément photoconducteur (303) comprenant un élément optique, notamment une lentille optique, et l'élément optique étant conçu pour guider la lumière dans l'élément photoconducteur (303).

4. Dispositif de capture (100) selon l'une des revendications précédentes, l'élément photoconducteur (303) étant en une matière synthétique, notamment en polycarbonate.

5. Dispositif de capture (100) selon l'une des revendications précédentes, l'élément photoconducteur (303) comportant un évidement, et la caméra vidéo (103) étant disposée dans l'évidement de l'élément photoconducteur (303).

6. Dispositif de capture (100) selon l'une des revendications précédentes, la surface lumineuse (305) comprenant une surface plane.

7. Dispositif de capture (100) selon l'une des revendications précédentes, comprenant :
un module de détection qui est conçu pour détecter une réflexion de la lumière émise dans l'image de visage capturée ;
la source de lumière (301) comprenant un premier élément lumineux et un deuxième élément lumineux, et le module de détection étant conçu pour commander le premier élément lumineux ou le deuxième élément lumineux en réponse à la détection de la réflexion dans l'image de visage capturée afin de modifier la lumière émise.

8. Dispositif de capture (100) selon la revendication 7, le module de détection étant conçu pour atténuer le premier élément lumineux ou le deuxième élément lumineux, ou le module de détection étant conçu pour éteindre le premier élément lumineux ou le deuxième élément lumineux.

9. Dispositif de capture (100) selon l'une des revendications précédentes, la source de lumière (301) comprenant une diode électroluminescente, notamment une diode électroluminescente blanche.

10. Système d'identification (200) destiné à identifier une personne, ledit système d'identification comprenant :
un dispositif de capture (100) selon l'une des revendications 1 à 9, le dispositif de capture (100) étant conçu pour capturer une image du visage de la personne ; et
un processeur (201) qui est conçu pour comparer l'image de visage capturée de la personne à une image de visage de référence afin d'identifier la personne.

11. Système d'identification (200) selon la revendication 10, comprenant :
un lecteur de document (401) qui est conçu pour lire l'image de visage de référence dans un document d'identification de la personne.

12. Procédé (500) de capture d'une image du visage d'une personne à l'aide d'un dispositif de capture (100), le dispositif de capture (100) comprenant un module d'éclairage (101) et une caméra vidéo (103), le module d'éclairage (101) comprenant une source de lumière (301) et un élément photoconducteur (303) pourvu d'une surface lumineuse (305), le visage de la personne étant disposé dans un volume de capture (307), et le module d'éclairage (101) étant conçu éclairer le visage de la personne dans le volume de capture (307)
l'élément photoconducteur (303) comportant une surface pourvue d'une pluralité d'évidements de surface destinés à réfléchir la lumière injectée par couplage à l'intérieur de l'élément photoconducteur (303), ledit procédé comprenant les étapes suivantes :
générer (501) de la lumière par le biais de la source de lumière (301) ;
injecter par couplage (503) la lumière générée dans l'élément photoconducteur (303) par le biais de la source de lumière (301) ;
émettre (505) la lumière injectée par couplage en direction du volume de capture (307) à travers l'élément photoconducteur (303) par le biais de la surface lumineuse (305) afin d'éclairer le visage de la personne de façon homogène ; et
capturer (507) une image du visage de la personne dans le volume de capture (307) par le biais de la caméra vidéo (103) afin de capturer l'image du visage de la personne,
la lumière injectée par couplage étant réfléchie à l'intérieur de l'élément photoconducteur (303) par le biais de la pluralité d'évidements de surface.

13. Procédé (600) d'identification d'une personne à l'aide d'un système d'identification (200), le système d'identification (200) comprenant un dispositif de capture (100) selon l'une des revendications 1 à 9 et un processeur (201), ledit procédé comprenant les étapes suivantes :
capturer (601) une image du visage de la personne par le biais du dispositif de capture (100) ; et
comparer (603) l'image de visage capturée de la personne à une image de visage de référence par le biais du processeur (201) afin d'identifier la personne.

14. Logiciel comprenant des instructions qui, lorsque le programme est exécuté par un ordinateur, amènent l'ordinateur à mettre en œuvre le procédé (500) selon la revendication 12 ou le procédé (600) selon la revendication 13.
